# EUROPEAN PATENT SPECIFICATION

(11) **EP 1 539 528 B1**
(45) Date of publication and mention of the grant of the patent: **29.10.2008**
(21) Application number: 03748046.4
(22) Date of filing: 17.09.2003
(51) Int. Cl.: B60L 5/32, B60L 5/28

(54) **ELECTRO-FLUIDIC CONTROL DEVICE AND METHOD FOR CONTROLLING AN ELECTRIC CURRENT COLLECTOR**
ELEKTRO-FLUIDISCHER REGLER UND VERFAHREN ZUR REGELUNG EINES STROMABNEHMERS
DISPOSITIF DE REGULATION ELECTROFLUIDIQUE ET PROCEDE PERMETTANT DE REGULER UN COLLECTEUR DE COURANT ELECTRIQUE

(30) Priority: 18.09.2002 GB 0221551
(43) Date of publication of application: 15.06.2005
(73) Proprietor: Bombardier Transportation GmbH, 10785 Berlin (DE)
(72) Inventor: RICHTER, Henrik, 16761 Hennigsdorf (DE)
(74) Representative: Broydé, Marc
(86) International application number: PCT/EP2003/010324
(87) International publication number: WO 2004/026615

(56) References cited:
- DE-C- 10 042 215
- GB-A- 1 128 563
- US-A- 1 529 802
- US-A- 4 410 057

## Description

### TECHNICAL FIELD OF THE INVENTION

The present invention relates to a fluid powered control device for controlling an electric current collector and, more specifically but not exclusively, for adjusting the contact force between a current collector of an electric vehicle and an electrical overhead line.

### BACKGROUND ART

A pneumatic control device of the aforementioned general type is known from prior art document GB 2,319,761,A. A pneumatic piston and cylinder mechanism acts on an articulated support of a current collector to urge the collector assembly into engagement with the overhead wire. A pivotal movement of the collector assembly is sensed by a valve having an operating member, which is rotatable in either of two directions from an inoperative position to effect either an increase or a decrease in the pressure supplied to the pneumatic piston and cylinder mechanism by means of a pneumatic pressure regulator. The pivotal movement of the collector assembly is considered as representative of the contact force of the collector assembly with the overhead wire. The valve is arranged so that pressure supplied to the pneumatic piston and cylinder system maintains the contact force of the collector assembly with the overhead wire.

This type of simple pneumatic control device with mechanical input has tended to be replaced by more sophisticated systems with electrical input signals, which provide many advantages such as adaptability to different vehicle speeds, to different overhead contact lines, to different line voltages or to varying meteorological conditions. A control device including a pneumatic actuator controlled by an open loop electronic control unit is disclosed in US 5,115,405,A. A force detection device measures the contact force between the collector and the overhead line, and supplies a signal that is processed by an electronic control unit. The pressure of the actuator is regulated when the measured contact force exceeds a predetermined maximum force threshold or in response to predetermined external control signals, including the vehicle speed. When a fault condition, such as the failure of the force sensor, is detected, the electronic control unit generates a control signal to effect a lowering of the collector and the disconnection of the vehicle from the overhead line. As a result, this system is not very reliable.

It has been further suggested to use a closed loop electronic control unit to control the supply of pressure to a pneumatic actuator as a function of various parameters, including the vehicle speed and the contact force itself. Several variations of this principle are described in the document DE 101 26 042,A. One arrangement combines an electronic open loop control unit with a pneumatic closed loop control circuit. The electronic unit defines a set value for the pressure as a function of the vehicle speed and of various parameters. A pressure regulator compares this set value to an actual value delivered by a contact force sensor and supplies air to the pneumatic actuator as a function of this difference. However, the electronic control and the pneumatic control are in series, so that the device fails as soon as one of its components fails, again resulting in a poor reliability.

In order to increase the reliability, and most importantly the availability of the device, it would be possible to insert a redundant electronic control unit comprising two identical control subunits, one taking over the control when the other fails. However, any breakdown of the power supply to the electronic control unit would still result in a failure of the control system. Moreover, the device would be costly, since the pressure sensors and the electronic subunits would have to be duplicated. A fluid-operated actuator with two mechanically operated pressure regulators is described in GB1128563.

Accordingly, there is a need for an improved control unit that offers reliability in service, without unacceptable duplication of components of the control system.

### SUMMARY OF THE INVENTION

According to the present invention, as set forth in claim 1, there is provided a control device for controlling a pressure delivered to a fluid-operated actuator for actuating an electric current collector assembly transmitting energy between an electrical line and a vehicle, the control device comprising:
a fluidic circuit comprising a pressure input for connecting the fluidic circuit to a pressure supply, and a pressure output for connecting the fluidic circuit to the fluid-operated actuator;
an electrically operated pressure regulator for delivering a first regulated output pressure in response to an electrical set value;
a second pressure regulator for delivering a second regulated output pressure in response to a non-electrical set value;
selection means for detecting at least one specific condition and for selectively directing the fluid from the pressure input to the pressure output through the second pressure regulator when the specific condition is detected.

The control device of the present invention significantly reduces the drawbacks encountered with the prior art, in a simple and cost-effective way. In particular, the control device of the present invention offers increased reliability and, more specifically, the availability of a device for controlling the contact force of a collector on an overhead wire, while maintaining the flexibility of control provided by an electronic control unit.

The selection means renders it possible to switch between a first mode of regulation of the fluid pressure using the electrically operated pressure regulator and a second mode of regulation using the non-electrically operated pressure regulator. In practice, the specific conditions under which such a switch is made will at least include abnormal conditions such as a failure of the electrically operated pressure regulator. Additionally, they may also include other specific situations such as a specific raising or lowering command.

The electrical set value may be provided by an electronic control unit as a function of parameters such as signals, or memorised or computed values representative of the vehicle speed, of the vehicle position on a memorized track, of the force applied by the overhead line on the collector, of the external forces applied to the linkage of the collector, of the wind direction or force, of the line voltage, of the position of the collector assembly or of the distance between the vehicle roof and the overhead line, to name but a few. The non-electrical set value can be a constant or adjustable set value. As indicated by their name, both regulators include means for comparing the regulated output value to the set value, so as to provide a compensation with respect to the outside conditions, such as the input pressure and the temperature.

Advantageously, the selection means direct the fluid from the pressure input to the pressure output through the electrically operated pressure regulator when no specific condition is detected. The preferred regulation mode is performed by the electrically operated pressure regulator, whereas the second, non-electrically operated mode is a fallback regulation mode.

Advantageously, the selection means may comprise, alone or in combination:
means for detecting that the first regulated output pressure is below a set lower threshold value and for selectively directing the fluid from the pressure input to the pressure output through the second pressure regulator when the first regulated output pressure is below the set lower threshold value;
means for detecting that the first regulated output pressure exceeds a set upper threshold value and for selectively directing the fluid from the pressure input to the pressure output through the second pressure regulator when the first regulated output pressure exceeds the set upper threshold value;
means for detecting a breakdown of an electric power supply of the electrically operated pressure regulator and for selectively directing the fluid from the pressure input to the pressure output through the second pressure regulator when said breakdown is detected;
means for detecting that a pressure upstream of the electrically operated pressure regulator is below a set input pressure value and for selectively directing the fluid from the pressure input to the pressure output through the second pressure regulator when said pressure upstream of the electrically operated pressure regulator is below said set input pressure value.

The lower and upper threshold values of the first regulated output pressure, as well as the loss of electrical power, indicate abnormal conditions of the electronic part of the device, which is then switched to the non-electric mode of control. The loss of pressure upstream of the electrically operated pressure regulator can be either due to a failure of the pressure supply or it can be a due to a lowering order. The selection means can be an electro-fluidic circuit, including pressure switches for providing an electrical binary output signal in response to the first regulated output pressure and an electromagnetic directional control valve for selecting the line. Alternatively, the selection means can be a fluidic circuit, including fluidic threshold switches that provide a fluidic binary signal to a fluid operated directional control valve.

Advantageously, means for switching off the electrically operated pressure regulator when said pressure upstream of the electrically operated pressure regulator is below the set input pressure value can be added, so as to save energy and increase the lifetime of the electrical component.

Advantageously the selection means comprise a directional control valve connected between the electrically operated pressure regulator, the second pressure regulator and the pressure output. The pressure input is preferably connected to the electrically operated pressure regulator and to the second pressure regulator through a line connection. When one of the pressure regulators is connected to the pressure output, the other pressure regulator remains connected to the pressure input so that it is in a hot-standby state, ready to take over the regulation in case of an abnormal situation. The response time is therefore very short and there are no perturbations or instabilities when switching from one mode to the other.

Advantageously, the selection means comprise an indicating switch for indicating whether the selection means directs fluid from the pressure input to the pressure output through the electrically operated pressure regulator or through the second pressure regulator. This indicating switch gives a feedback to the control interface of the vehicle. It can also be used as parameter by the electronic control unit that provides the electrical set value to the electrically operated pressure regulator.

Advantageously, the fluidic circuit is a pneumatic circuit. Alternatively, it can be a hydraulic circuit.

The invention also contemplates a method according to claim 12 for controlling pressure delivered to a fluid-operated actuator for actuating an electric current collector assembly transmitting energy between an electrical line and a vehicle, the control device comprising:
a fluidic circuit comprising a pressure input for connecting the fluidic circuit to a pressure supply, and a pressure output for connecting the fluidic circuit to the fluid-operated actuator;
an electrically operated pressure regulator for delivering a first regulated output pressure in response to an electrical set value;
a second pressure regulator for delivering a second regulated output pressure in response to a non-electrical set value;
wherein the fluid is directed from the pressure input to the pressure output through the second pressure regulator when a specific condition is detected.

In particular, the fluid is directed from the pressure input to the pressure output through the second pressure regulator when a lowering order or an abnormal condition is detected. Advantageously, the fluid is directed from the pressure input to the pressure output through the first pressure regulator when no specific condition is detected. This method can advantageously be implemented using a control device as described herein.

### BRIEF DESCRIPTION OF THE FIGURES

Other advantages and features of the invention will become apparent from the following description of specific embodiments of the invention given as non-limiting examples only and represented in the accompanying drawings in which:
Figure 1 is a general diagrammatic view of a first embodiment of the invention;
Figure 2 is a general diagrammatic view of an electrically operated pressure regulator used in the first embodiment of the invention;
Figure 3 is a general diagrammatic view of a second embodiment of the invention;
Figure 4 is a general diagrammatic view of another electrically operated pressure regulator that can be used as alternative to the regulator of figure 2.

### DETAILED DESCRIPTION

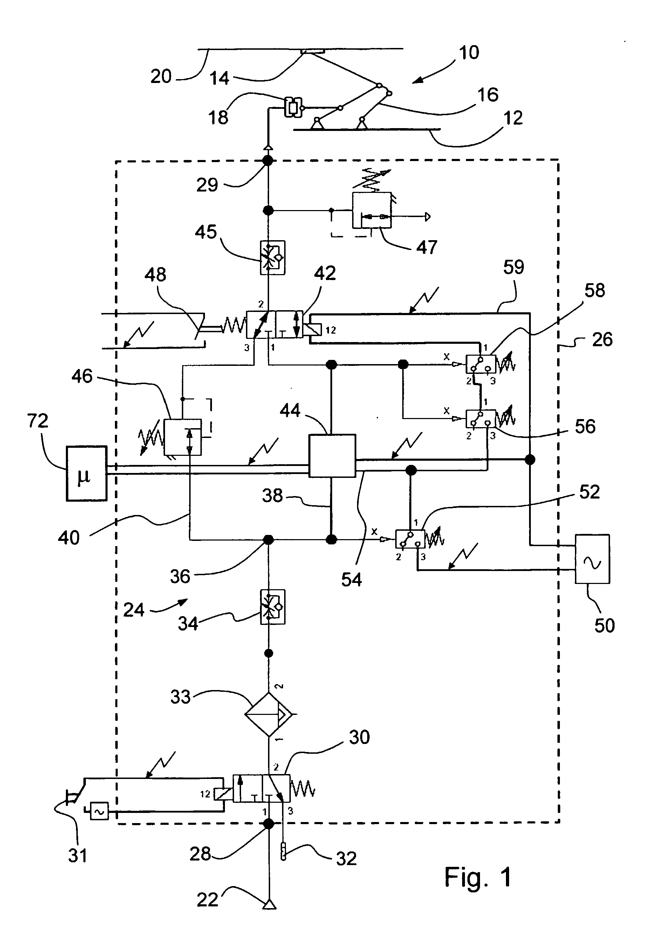

With reference to figure 1, an electric current collector assembly 10 for an electric vehicle 12 provided with a collector head 14 supported by an articulated support 16, is raised and lowered by means of a pneumatic actuator 18. The actuator 18 also applies in the raised position a force necessary to maintain the collector head 14 in contact with an overhead electrical line 20.

Pressurized air is led from an air pressure supply 22 to the actuator 18 through a pneumatic circuit 24, which is part of an electro-pneumatic control device 26 for controlling the contact force between the collector head 14 and the overhead line 20. The pneumatic circuit 24 has an input port 28 connected to the air pressure supply 22 and an output port 29 connected to the actuator 18. The input port 28 is connected to a magnetic 3/2 way directional control valve 30 with spring return, acting as raising and lowering valve and operated by a switch 31 located on a control interface in the vehicle. The raising and lowering valve 30 is also connected to the atmosphere through a silencer 32. The input airflow is laid through an air filter 33 and a one-way adjustable flow control valve 34 to a line connection 36 with a first operation line 38 on the right hand side of the figure, and a second operation line 40 on the left hand side. The first operation line 38 is connected to a first port of a selection valve 42 through an electrically operated pressure regulator 44. The selection valve 42 is a 3/2 way directional control valve. The selection valve 42 has a second port connected to the actuator 18 through a one-way adjustable flow control valve 45. The second operation line 40 is connected to a third port of the selection valve 42 through a pneumatic pressure regulator 46. The pneumatic pressure regulator 46 is an adjustable proportional valve for regulating the downstream pressure according to an adjustable preset value. Further, the valve 46 is of the type that allows communication between its input and output ports when the input pressure is lower than the output pressure. A safety valve 47 limits the pressure between the selection valve 42 and the actuator 18.

The selection valve 42 is magnetically operated and biased by a spring so that in the absence of electrical power, the second port is connected to the third port. The valve 42 also actuates an electric indication switch 48 to give a feedback to the control interface of the train.

The electrically operated pressure regulator 44 is connected to an electric power supply 50 through a normally open pressure switch 52 and an electric supply line 54. The pressure actuator of the pressure switch 52 is connected to the line connection 36. The pressure switch 52 is open and the electrically operated pressure regulator 44 is switched off when the pressure at the line connection 36 is too low. A normally open pressure switch 56 and a normally closed pressure switch 58 are also connected in series between the pressure switch 52 and the electromagnetic actuator of the selection valve 42, in a bypass branch 59 parallel to the supply line 54. The two pressure switches 56, 58 have a pressure actuator connected to the output port of the electrically operated pressure regulator 44 and a biasing spring. The biasing spring of the normally closed pressure switch 58 is adjusted so that the switch 58 is opened when the pressure at the output port of the electrically operated pressure regulator 44 exceeds an upper threshold value. The biasing spring of the normally open pressure switch 56 is adjusted so that the switch 56 is closed when the pressure at the pressure output port of the electrically operated pressure regulator 44 exceeds a lower threshold value. As a result, the electric line 59 is closed whenever the pressure at the output port of the electrically operated pressure regulator 44 is between the lower and the upper threshold values.

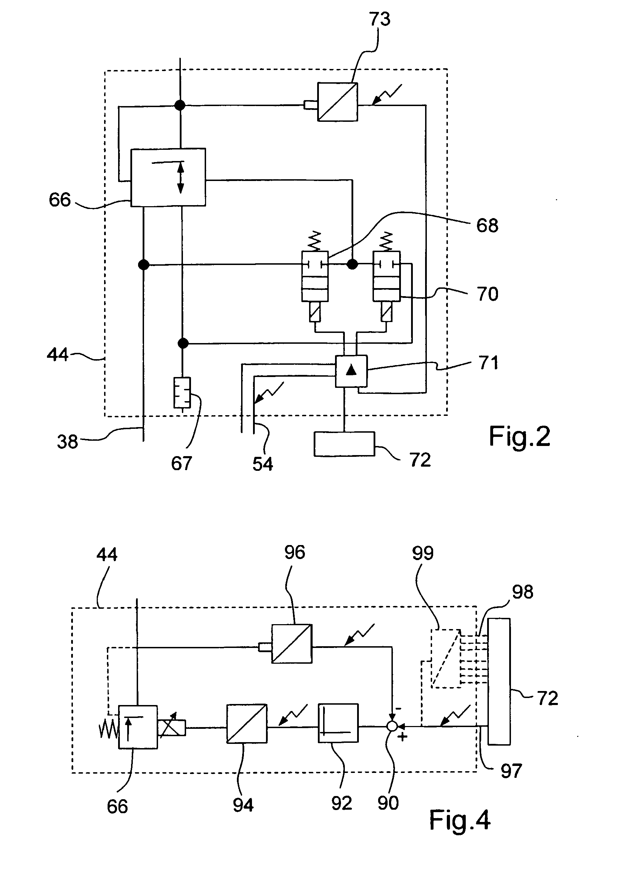

The electrically operated pressure regulator 44 is shown in more details in figure 2. It comprises a proportional control valve 66 with an input port connected to the first line 38, a relief port connected to the atmosphere through a silencer 67, an output port connected to the first port of the selection valve 42 and a control port connected to the input port through a first shut off valve 68 and to the silencer 67 through a second shut off valve 70. Both shut off valves 68, 70 are magnetically operated and spring biased towards a closed position.

The electrically operated pressure regulator 44 also comprises an electrical circuit including a comparator 71 for comparing an electrical set value representative of the contact force between the current collector and the overhead line and delivered by an electronic controller 72, to an actual measured electrical value, which is given by a pressure sensor 73 that measures the pressure at the output port of the pressure control valve 66. As a result of the comparison, one or the other of the two magnetically operated shut-off valves 68, 70 is operated to control the pressure of the control port of the pressure control valve 66.

The electronic controller 72 delivers the electric set value in function of one or more parameters such as measured signals or computed or memorised values representative of the vehicle speed, of the vehicle position on a known track, of the force applied by the overhead line on the collector, of the external forces applied to the linkage of the current collector 10, of the wind direction or force, of the line voltage, of the position of the actuator 18 or of the current collector assembly 10, or of the distance between the vehicle roof and the overhead line, to name but a few. The electronic controller 72 can be of the type described in DE 101 26 042 A or in US 5,114,405A for instance, the disclosures of which are incorporated herein by reference.

The device operates as follows.

Starting from a retracted position of the current collector 10 with the raising and lowering valve 30 in its return position and no pressure in the pneumatic circuit 24, the electromagnetic actuator of the raising and lowering valve 30 is energized to connect the pressure supply 22 to the line connection 36. The selection valve 42 is in its return position, and the air flows through the one-way adjustable flow control valve 34, the pneumatic pressure regulator 46 to the actuator 18, to raise the current collector 10. The raising speed can be adjusted with the adjustable flow control valve 34. As soon as the pressure at the line connection 36 exceeds the value set by the return spring of the pressure switch 52, the pressure switch 52 closes and the electrically operated pressure regulator is energized. The pressure starts to build up at the output port of the electrically operated pressure regulator 44. When this pressure exceeds the lower pressure value set up by the normally open pressure switch 56, the switch 56 closes and the electromagnetic actuator of the directional valve 42 is energized to force the valve 42 to connect the electrically operated pressure regulator 44 to the actuator 18. The electrically operated pressure regulator takes over the regulation of the pressure according to the set value delivered by the electronic controller 72.

If for any reason the output pressure of the electrically operated pressure regulator rises or drops beyond the limits set by the pressure switches 56, 58, e.g. if the set value delivered by the electronic controller 72 is incorrect or if the electrically operated pressure regulator itself is out of order, one of the switches 56, 58 will open and the electromagnetic actuator of the valve 42 will be de-energized. The valve 42 will move to the non-actuated position and connect the pneumatic actuator 18 to the pneumatic pressure regulator 46. The pneumatic pressure regulator 46 will then regulate the pressure of the pneumatic actuator 18 in function of its set value.

If the electric power supply 50 fails, the valve 42 will automatically return to the non-actuated position and the pressure of the actuator 18 will be regulated through the pneumatic regulator 46.

Thus, the most common failure cases of the control system are covered, and a fallback regulation mode through the pneumatic pressure regulator is available.

To lower the current collector 10, the raising and lowering valve 30 is de-energized and returns to its non-actuated position. The air is vented through the silencer 32 so that the pressure at the line connection 36 drops. The pressure switch 52 opens the electric circuit that supplies electric energy to the electrically operated pressure regulator 44 and to the electromagnetic actuator of the valve 42. The valve 42 returns to the non-operated position. The air flows back from the actuator 18 to the atmosphere through the one-way adjustable flow control valve 45, the selection valve 42, the pneumatic pressure regulator 46, the raising and lowering valve 30 and the silencer 32.

It will be appreciated that when the pneumatic circuit 24 is vented and the current collector is lowered, there is no pressure at the line connection 36, so that the pressure switch 52 opens and the electrically operated pressure regulator 44 is switched off to save energy and increase its lifetime of the electrical and electromechanical components.

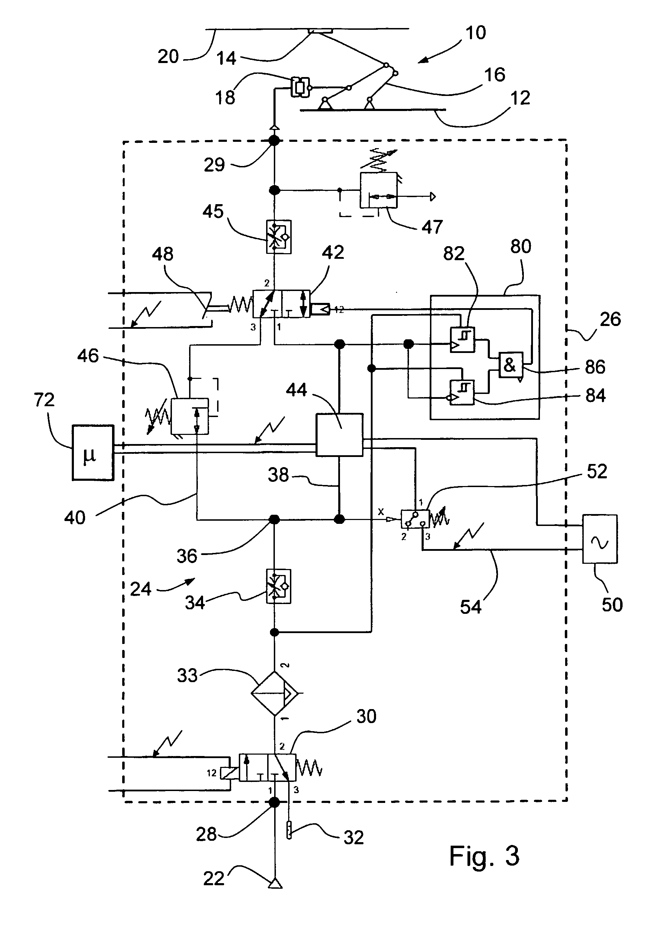

A second embodiment of the invention is shown in figure 3. The electro-pneumatic control device 26 according to the second embodiment of the invention is of similar constitution to that of the first embodiment, so that the same reference signs have been taken to designate identical or similar elements. The control device according to the second embodiment differs from the previous one essentially by the fact that the control valve 42 is pneumatically controlled by a pneumatic subunit 80 which delivers to the selection valve 42 a binary signal depending on whether the pressure at the output port of the electrically operated pressure regulator 44 is within a predetermined pressure range or not. The pneumatic subunit 80 comprises a first threshold valve 82 that delivers an output pressure signal when the input pressure is above a first lower threshold value, a second threshold valve 84 that delivers an output pressure signal when the input pressure is below a second upper threshold value, and a shuttle valve 86 having an AND function. It will be appreciated that the subunit 80 can be realized with several separate valves or a single integrated valve. The electrically operated pressure regulator is designed so that its inlet and outlet are connected to one another whenever the inlet pressure drops below the outlet pressure.

Another embodiment of the electrically operated pressure regulator is shown in figure 4. This electrically operated pressure regulator 44 comprises an electrical comparator 90 connected to an integral plus derivative regulator 92 that delivers a control signal to a 3/2 way proportional valve 66 through a voltage current converter 94. A pressure sensor 96 connected at the output port of the proportional valve 66 provides a feedback. The regulator is provided with an analogue input 97 and a digital input 98 for the set value. The digital 98 input is connected to the comparator through a digital/analogue converter 99. This type of pressure regulator is preferred to the type shown in figure 2 when the response time of the electrically operated pressure regulator 44 is critical, and in particular for highspeed trains.

While preferred embodiments of the invention have been described, it is to be understood by those skilled in the art that the invention is naturally not limited to these embodiments. Many variations are possible.

The electrically operated pressure regulator has been described as a circuit with elementary parts, which are chosen to meet the environmental requirements, and in particular the temperature requirements of the railway industry. However, these elementary parts can also be replaced by an integrated valve. More generally, the electrically operated pressure regulator can be any valve or electro-pneumatic circuit that is controlled by an electrical signal (current, voltage, analogue or digital signal) and provided with an internal control loop that ensures that variations of the input pressure, temperature, etc. are internally compensated.

The raising and lowering valve 30, the filter 33, the one-way adjustable flow control valves 34 and 45 and the safety valve 47 are not necessarily integrated to the electro-pneumatic control device 26, since the basic function of the control device is to control the pressure delivered to the actuator 18 in the raised position. In fact, the input port 28 could be defined directly upstream of the line connection 36 and the output port directly downstream of the selection valve 42.

The proportional control valves 46, 66 could be of the type which isolate the output when the input pressure is below the output pressure. In such a case, a slight modification to the pneumatic circuit would be necessary to vent the pneumatic circuit in response to a lowering order.

In the first embodiment of the invention, the electric circuit can be modified so as to have a first branch including the pressure switch 52 and the electrically controlled pressure regulator 44, and as second parallel branch including the pressure switches 56, 58 and the valve 42.

The selection valve can be provided with an additional manual actuator that enables to force the valve to the operated or to the non-operated position.

The actuator can be a single or double-acting cylinder. The pneumatic circuit can be replaced by a hydraulic circuit. Other variations will be readily apparent to those skilled in the art.

## Claims

1. A control device (26) for controlling pressure delivered to a fluid-operated actuator for actuating an electric current collector assembly (10) transmitting energy between an electrical line (20) and a vehicle (12), the control device (26) comprising:
a fluidic circuit (24) comprising a pressure input (28) for connecting the fluidic circuit (24) to a pressure supply (22), and a pressure output (29) for connecting the fluidic circuit (24) to the fluid-operated actuator (18);
an electrically operated pressure regulator (44) for delivering a first regulated output pressure in response to an electrical set value;
a second pressure regulator (46) for delivering a second regulated output pressure in response to a non-electrical set value;
selection means for detecting at least one specific condition and for selectively directing the fluid from the pressure input (28) to the pressure output (29) through the second pressure regulator when the specific condition is detected.

2. A control device as claimed in claim 1, wherein the selection means direct the fluid from the pressure input (28) to the pressure output (29) through the electrically operated pressure regulator (44) when no specific condition is detected.

3. A control device as claimed in any one of claims 1 or 2, wherein the selection means comprise means for detecting that the first regulated output pressure is below a set lower threshold value and for selectively directing the fluid from the pressure input (28) to the pressure output (29) through the second pressure regulator (46) when the first regulated output pressure is below the set lower threshold value.

4. A control device as claimed in any one of claims 1 to 3, wherein the selection means comprise means for detecting that the first regulated output pressure exceeds set upper threshold value and for selectively directing the fluid from the pressure input (28) to the pressure output (29) through the second pressure regulator (46) when the first regulated output pressure exceeds the set upper threshold value.

5. A control device as claimed in any one of claims 1 to 4, wherein the selection means comprise means detecting a breakdown of an electric power supply (50) of the electrically operated pressure regulator (44) and for selectively directing the fluid from the pressure input (28) to the pressure output (29) through the second pressure regulator (46) when said breakdown is detected.

6. A control device as claimed in any one of claims 1 to 5, wherein the selection means comprise means detecting that a pressure upstream of the electrically operated pressure regulator (44) is below a set input pressure value and for selectively directing the fluid from the pressure input (28) to the pressure output (29) through the second pressure regulator (46) when said pressure upstream of the electrically operated pressure regulator (44) is below said set input pressure value.

7. A control device as claimed in claim 6, further comprising means for switching off the electrically operated pressure regulator (44) when said pressure upstream of the electrically operated pressure regulator (44) is below said set input pressure value.

8. A control device as claimed in any one of claims 1 to 7, wherein the selection means comprise a directional control valve means (42) connected between the electrically operated pressure regulator (44), the second pressure regulator (46) and the pressure output (29).

9. A control device as claimed in claim 8, wherein the pressure input (28) is connected to the electrically operated pressure regulator (46) and to the second pressure regulator (44) through a line connection (36).

10. A control device as claimed in any one of claims 1 to 9, wherein the selection means comprise an indicating switch (48) for indicating whether the selection means direct fluid from the pressure input (28) to the pressure output (29) through the electrically operated pressure regulator (44) or through the second pressure regulator (46.

11. A control device as claimed in any one of claims 1 to 10, wherein the fluidic circuit is a pneumatic circuit.

12. Method for controlling pressure delivered to a fluid-operated actuator for actuating an electric current collector assembly (10) for transmitting energy between an electrical line (20) and a vehicle (12), using a control device (26) comprising:
a fluidic circuit (24) comprising a pressure input (28) for connecting the fluidic circuit (24) to a pressure supply (22), and a pressure output (29) for connecting the fluidic circuit (24) to the fluid-operated actuator (18);
an electrically operated pressure regulator (44) for delivering a first regulated output pressure in response to an electrical set value;
a second pressure regulator (46) for delivering a second regulated output pressure in response to a non-electrical set value;
wherein the fluid is directed from the pressure input (28) to the pressure output (29) through the second pressure regulator (46) when a specific condition is detected.

13. Method for controlling pressure delivered to a fluid-operated actuator as claimed in claim 12, wherein the fluid is directed from the pressure input (28) to the pressure output (29) through the electrically operated pressure regulator (44) when no specific condition is detected.

14. Method for controlling pressure delivered to a fluid-operated actuator as claimed in claims 12 or 13, wherein the fluid is directed from the pressure input (28) to the pressure output (29) through the second pressure regulator (46) when a lowering order is detected.

15. Method for controlling pressure delivered to a fluid-operated actuator as claimed in any one of claims 12 to 14, wherein the fluid is directed from the pressure input (28) to the pressure output (29) through the second pressure regulator (46) when an abnormal condition is detected.

16. A control device for controlling pressure delivered to a fluid-operated actuator for actuating an electric current collector assembly transmitting energy between an electrical line and a vehicle substantially as hereinbefore described having reference to Figures 1, 2 and 4 or Figure 3.

17. Method for controlling pressure delivered to a fluid-operated actuator for actuating an electric current collector assembly for transmitting energy between an electrical line and a vehicle substantially as hereinbefore described having reference to Figures 1, 2 and 4 or Figure 3.

## Patentansprüche

1. Steuervorrichtung (26) zum Regeln eines Drucks, der einem fluidbetätigten Aktuator zum Betätigen einer elektrischen Stromabnehmerbaugruppe (10) zugeführt wird, die Energie zwischen einer elektrischen Leitung (20) und einem Fahrzeug (12) überträgt, wobei die Steuervorrichtung (26) Folgendes umfasst:
einen fluidischen Schaltkreis (24), umfassend einen Druckeingang (28) zum Verbinden des fluidischen Schaltkreises (24) mit einer Druckversorgung (22) und
einen Druckausgang (29) zum Verbinden des fluidischen Schaltkreises (24) mit dem fluidbetätigten Aktuator (18); einen elektrisch betätigten Druckregler (44) zum Liefern eines ersten geregelten Ausgangsdrucks als Reaktion auf einen elektrischen Sollwert;
einen zweiten Druckregler (46) zum Liefern eines zweiten geregelten Ausgangsdrucks als Reaktion auf einen nichtelektrischen Sollwert;
Auswahlmittel zum Detektieren wenigstens einer spezifischen Bedingung und zum selektiven Leiten des Fluids von dem Druckeingang (28) durch den zweiten Druckregler zu dem Druckausgang (29), wenn die spezifische Bedingung detektiert wird.

2. Steuervorrichtung nach Anspruch 1, bei der die Auswahlmittel das Fluid von dem Druckeingang (28) durch den elektrisch betätigten Druckregler (44) zu dem Druckausgang (29) leiten, wenn keine spezifische Bedingung detektiert wird.

3. Steuervorrichtung nach einem der Ansprüche 1 oder 2, bei der die Auswahlmittel Mittel zum Detektieren, dass der erste geregelte Ausgangsdruck unter einem unteren Schwellensollwert liegt, und zum selektiven Leiten des Fluids von dem Druckeingang (28) durch den zweiten Druckregler (46) zu dem Druckausgang (29), wenn der erste geregelte Ausgangsdruck unter dem unteren Schwellensollwert liegt, aufweisen.

4. Steuervorrichtung nach einem der Ansprüche 1 bis 3, bei der die Auswahlmittel Mittel zum Detektieren, dass der erste geregelte Ausgangsdruck über einem oberen Schwellensollwert liegt, und zum selektiven Leiten des Fluids von dem Druckeingang (28) durch den zweiten Druckregler (46) zu dem Druckausgang (29), wenn der erste geregelte Ausgangsdruck über dem oberen Schwellensollwert liegt, aufweisen.

5. Steuervorrichtung nach einem der Ansprüche 1 bis 4, bei der die Auswahlmittel Mittel zum Detektieren eines Ausfalls einer elektrischen Energieversorgung (50) des elektrisch betätigten Druckreglers (44) und zum selektiven Leiten des Fluids von dem Druckeingang (28) durch den zweiten Druckregler (46) zu dem Druckausgang (29), wenn der genannte Ausfall erkannt wird, aufweisen.

6. Steuervorrichtung nach einem der Ansprüche 1 bis 5, bei der die Auswahlmittel Mittel zum Detektieren, dass ein Druck vor dem elektrisch betätigten Druckregler (44) unter einem Eingangsdrucksollwert liegt, und zum selektiven Leiten des Fluids von dem Druckeingang (28) durch den zweiten Druckregler (46) zu dem Druckausgang (29), wenn der genannte Druck vor dem elektrisch betätigten Druckregler (44) unter dem genannten Eingangsdrucksollwert liegt, aufweisen.

7. Steuervorrichtung nach Anspruch 6, ferner umfassend Mittel zum Ausschalten des elektrisch betätigten Druckreglers (44), wenn der genannte Druck vor dem elektrisch betätigten Druckregler (44) unter dem genannten Eingangsdrucksollwert liegt.

8. Steuervorrichtung nach einem der Ansprüche 1 bis 7, bei der die Auswahlmittel ein Richtungssteuerventilmittel (42) aufweisen, die zwischen dem elektrisch betätigten Druckregler (44), dem zweiten Druckregler (46) und dem Druckausgang (29) zwischengeschaltet sind.

9. Steuervorrichtung nach Anspruch 8, bei der der Druckeingang (28) durch eine Leitungsverbindung (36) mit dem elektrisch betätigten Druckregler (46) und dem zweiten Druckregler (44) verbunden ist.

10. Steuervorrichtung nach einem der Ansprüche 1 bis 9, bei der die Auswahlmittel einen Anzeigeschalter (48) zum Anzeigen, ob die Auswahlmittel Fluid von dem Druckeingang (28) durch den elektrisch betätigten Druckregler (44) oder durch den zweiten Druckregler (46) zu dem Druckausgang (29) leiten, aufweisen.

11. Steuervorrichtung nach einem der Ansprüche 1 bis 10, bei der der fluidische Schaltkreis ein pneumatischer Schaltkreis ist.

12. Verfahren zum Regeln eines Drucks, der einem fluidbetätigten Aktuator zum Betätigen einer elektrischen Stromabnehmerbaugruppe (10) zugeführt wird die Energie zwischen einer elektrischen Leitung (20) und einem Fahrzeug (12)überträgt, unter Verwendung einer Steuervorrichtung (26), umfassend:
einen fluidischen Schaltkreis (24), umfassend einen Druckeingang (28) zum Verbinden des fluidischen Schaltkreises (24) mit einer Druckversorgung (22) und
einen Druckausgang (29) zum Verbinden des fluidischen Schaltkreises (24) mit dem fluidbetätigten Aktuator (18); einen elektrisch betätigten Druckregler (44) zum Liefern eines ersten geregelten Ausgangsdrucks als Reaktion auf einen elektrischen Sollwert;
einen zweiten Druckregler (46) zum Liefern eines zweiten geregelten Ausgangsdrucks als Reaktion auf einen nichtelektrischen Sollwert;
wobei das Fluid von dem Druckeingang (28) durch den zweiten Druckregler (46) zu dem Druckausgang (29) geleitet wird, wenn eine spezifische Bedingung detektiert wird.

13. Verfahren zum Regeln des Drucks, der einem fluidbetätigten Aktor zugeführt wird, nach Anspruch 12,
wobei das Fluid von dem Druckeingang (28) durch den elektrisch betätigten Druckregler (44) zu dem Druckausgang (29) geleitet wird, wenn keine spezifische Bedingung detektiert wird.

14. Verfahren zum Regeln des Drucks, der einem fluidbetätigten Aktor zugeführt wird, nach Anspruch 12 oder 13, wobei das Fluid von dem Druckeingang (28) durch den zweiten Druckregler (46) zu dem Druckausgang (29) geleitet wird, wenn ein Senkbefehl detektiert wird.

15. Verfahren zum Regeln des Drucks, der einem fluidbetätigten Aktor zugeführt wird, nach einem der Ansprüche 12 bis 14, wobei das Fluid von dem Druckeingang (28) durch den zweiten Druckregler (46) zu dem Druckausgang (29) geleitet wird, wenn eine abnormale Bedingung detektiert wird.

16. Steuervorrichtung zum Regeln des Drucks, der einem fluidbetätigten Aktuator zum Betätigen einer elektrischen Stromabnehmerbaugruppe zugeführt wird, die Energie zwischen einer elektrischen Leitung und einem Fahrzeug überträgt, im Wesentlichen wie im Vorangehenden mit Bezug auf Figuren 1, 2 und 4 oder Figur 3 beschrieben.

17. Verfahren zum Regeln des Drucks, der einem fluidbetätigten Aktor zum Betätigen einer elektrischen Stromabnehmerbaugruppe zugeführt wird, die Energie zwischen einer elektrischen Leitung und einem Fahrzeug überträgt, im Wesentlichen wie im Vorangehenden mit Bezug auf Figuren 1, 2 und 4 oder Figur 3 beschrieben.

## Revendications

1. Dispositif de contrôle (26) permettant de contrôler la pression délivrée à un actionneur commandé par un fluide destiné à actionner un ensemble collecteur de courant électrique (10) transmettant de l'énergie entre une ligne électrique (20) et un véhicule (12), le dispositif de contrôle (26) comprenant :
un circuit fluidique (24) comprenant une entrée de pression (28) permettant de raccorder le circuit fluidique (24) à une alimentation en pression (22), et une sortie de pression (29) permettant de raccorder le circuit fluidique (24) à l'actionneur commandé par un fluide (18) ;
un régulateur de pression commandé électriquement (44) permettant de délivrer une première pression de sortie régulée en réponse à une valeur de consigne électrique ;
un second régulateur de pression (46) permettant de délivrer une seconde pression de sortie régulée en réponse à une valeur de consigne non électrique ;
des moyens de sélection permettant de détecter au moins une condition spécifique et de diriger de manière sélective le fluide entre l'entrée de pression (28) et la sortie de pression (29) par l'intermédiaire du second régulateur de pression lorsque la condition spécifique est détectée.

2. Dispositif de contrôle selon la revendication 1, dans lequel les moyens de sélection dirigent le fluide entre l'entrée de pression (28) et la sortie de pression (29) par l'intermédiaire du régulateur de pression actionné électriquement (44) lorsqu'aucune condition spécifique n'est détectée.

3. Dispositif de contrôle selon l'une quelconque des revendications 1 ou 2, dans lequel les moyens de sélection comprennent des moyens permettant de détecter que la première pression de sortie régulée est en dessous d'une valeur de seuil inférieur de consigne et permettant de diriger de manière sélective le fluide entre l'entrée de pression (28) et la sortie de pression (29) par l'intermédiaire du second régulateur de pression (46) lorsque la première pression de sortie régulée est inférieure à la valeur de seuil inférieur de consigne.

4. Dispositif de contrôle selon l'une quelconque des revendications 1 à 3, dans lequel les moyens de sélection comprennent des moyens permettant de détecter que la première pression de sortie régulée est supérieure à une valeur de seuil supérieur de consigne et permettant de diriger de manière sélective le fluide entre l'entrée de pression (28) et la sortie de pression (29), par l'intermédiaire du second régulateur de pression (46), lorsque la première pression de sortie régulée est supérieure à la valeur de seuil supérieur de consigne.

5. Dispositif de contrôle selon l'une quelconque des revendications 1 à 4, dans lequel les moyens de sélection comprennent un moyen permettant de détecter une interruption de l'alimentation électrique (50) du régulateur de pression commandé électriquement (44) et de diriger de manière sélective le fluide entre l'entrée de pression (28) et la sortie de pression (29) par l'intermédiaire du second régulateur de pression (46) lorsque ladite interruption est détectée.

6. Dispositif de contrôle selon l'une quelconque des revendications 1 à 5, dans lequel les moyens de sélection comprennent des moyens permettant de détecter qu'une pression en amont du régulateur de pression commandé par l'électricité (44) est inférieure à une valeur de pression d'entrée de tarage et permettant de diriger de manière sélective le fluide entre l'entrée de pression (28) et la sortie de pression (29) par l'intermédiaire du second régulateur de pression (46) lorsque ladite pression en amont du régulateur de pression commandé par l'électricité (44) est inférieure à ladite valeur de pression d'entrée de tarage.

7. Dispositif de contrôle selon la revendication 6, comprenant en outre des moyens permettant de mettre hors tension le régulateur de pression commandé par l'électricité (44) lorsque ladite pression en amont du régulateur de pression commandé par l'électricité (44) est inférieure à ladite valeur de pression d'entrée de tarage.

8. Dispositif de contrôle selon l'une quelconque des revendications 1 à 7, dans lequel les moyens de sélection comprennent un moyen de soupape de contrôle directionnelle (42) raccordé entre le régulateur de pression commandé par l'électricité (44), le second régulateur de pression (46) et la sortie de pression (29).

9. Dispositif de contrôle selon l'une quelconque des revendications 8, dans lequel l'entrée de pression (28) est raccordée au régulateur de pression commandé par l'électricité (46) et au second régulateur de pression (44) par l'intermédiaire d'une connexion au réseau (36).

10. Dispositif de contrôle selon l'une quelconque des revendications 1 à 9, dans lequel les moyens de sélection comprennent un interrupteur indicateur (48) permettant d'indiquer si les moyens de sélection dirigent le fluide entre l'entrée de pression (28) et la sortie de pression (29) par l'intermédiaire du régulateur de pression commandé par l'électricité (44) ou par l'intermédiaire du second régulateur de pression (46).

11. Dispositif de contrôle selon l'une quelconque des revendications 1 à 10, dans lequel le circuit fluidique est un circuit pneumatique.

12. Procédé de contrôle de la pression délivrée à un actionneur commandé par un fluide afin d'actionner un ensemble de connecteur de courant électrique (10) destiné à transmettre de l'énergie entre une ligne électrique (20) et un véhicule (12), en utilisant un dispositif de contrôle (26) comprenant :
un circuit fluidique (24) comprenant une entrée de pression (28) permettant de connecter le circuit fluidique (24) à une alimentation de pression (22), et une sortie de pression (29) permettant de connecter le circuit fluidique (24) à l'actionneur commandé par un fluide (18) ;
un régulateur de pression commandé par l'électricité (44) destiné à délivrer une première pression de sortie régulée en réponse à une valeur de consigne électrique ;
un second régulateur de pression (46) destiné à délivrer une seconde pression de sortie régulée en réponse à une valeur de consigne non électrique ;
dans lequel le fluide est dirigé entre l'entrée de pression (28) et la sortie de pression (29) par l'intermédiaire du second régulateur de pression (46) lorsqu'une condition spécifique est détectée.

13. Procédé de contrôle de la pression délivrée à un actionneur commandé par un fluide tel que revendiqué dans la revendication 12, dans lequel le fluide est dirigé entre l'entrée de pression (28) et la sortie de pression (29) par l'intermédiaire du régulateur de pression commandé par l'électricité (44) lorsque aucune condition spécifique n'est détectée.

14. Procédé de contrôle de la pression délivrée à un actionneur commandé par un fluide tel que revendiqué dans les revendications 12 et 13, dans lequel le fluide est dirigé de l'entrée de pression (28) vers la sortie de pression (29) par l'intermédiaire du second régulateur de pression (46) lorsqu'un ordre d'abaissement est détecté.

15. Procédé destiné à contrôler la pression délivrée à un actionneur commandé par un fluide tel que revendiqué dans l'une quelconque des revendications 12 à 14, dans lequel le fluide est dirigé de l'entrée de pression (28) vers la sortie de pression (29) par l'intermédiaire du second régulateur de pression (46) lorsqu'une condition anormale est détectée.

16. Dispositif de contrôle permettant de contrôler la pression délivrée à un actionneur commandé par un fluide afin d'actionner un ensemble collecteur de courant électrique transmettant de l'énergie entre une ligne électrique et un véhicule, sensiblement tel que décrit ci-dessus en faisant référence aux figures 1, 2 et 4 ou à la figure 3.

17. Procédé de contrôle de la pression délivrée à un actionneur commandé par un fluide afin d'actionner un ensemble collecteur de courant électrique pour transmettre de l'énergie entre une ligne électrique et un véhicule, sensiblement tel que décrit ci-dessus en faisant référence aux figures 1, 2 et 4 ou à la figure 3.
